(19) Europäisches Patentamt / European Patent Office / Office européen des brevets

(11) **EP 2 896 501 B1**

(12) **EUROPEAN PATENT SPECIFICATION**

(45) Date of publication and mention
of the grant of the patent:
**07.06.2023   Bulletin 2023/23**

(21) Application number: **13838003.5**

(22) Date of filing: **10.09.2013**

(51) International Patent Classification (IPC):
**B32B 27/08** (2006.01)    **B32B 27/18** (2006.01)
**B32B 27/32** (2006.01)    **B32B 27/36** (2006.01)
**C08J 7/048** (2020.01)    **B32B 27/20** (2006.01)
**B32B 27/30** (2006.01)    **B32B 27/34** (2006.01)
**C08J 7/04** (2020.01)

(52) Cooperative Patent Classification (CPC):
**B32B 27/08; B32B 27/18; B32B 27/20;**
**B32B 27/30; B32B 27/304; B32B 27/306;**
**B32B 27/32; B32B 27/34; B32B 27/36;**
**B32B 27/365; C08J 7/0427; C08J 7/048;**
B32B 2307/518; B32B 2307/7244; B32B 2439/46;

(Cont.)

(86) International application number:
**PCT/JP2013/074297**

(87) International publication number:
**WO 2014/042133 (20.03.2014 Gazette 2014/12)**

(54) **GAS BARRIER LAMINATE**

GASBARRIERELAMINAT

STRATIFIÉ DE BARRIÈRE CONTRE LES GAZ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **11.09.2012   JP 2012199488**

(43) Date of publication of application:
**22.07.2015   Bulletin 2015/30**

(73) Proprietor: **Unitika Ltd.**
**Osaka-shi, Osaka 541-8566 (JP)**

(72) Inventors:
• **MAEHARA, Atsushi**
**Kyoto 611-0021 (JP)**
• **OKABE, Takashi**
**Kyoto 611-0021 (JP)**
• **NANJO, Kazunari**
**Kyoto 611-0021 (JP)**

• **ANADA, Arihiro**
**Kyoto 611-0021 (JP)**

(74) Representative: **Vigand, Philippe et al**
**Novagraaf International SA**
**Chemin de l'Echo 3**
**1213 Onex - Genève (CH)**

(56) References cited:
**EP-A1- 1 614 532         EP-A1- 2 058 378**
**WO-A1-03/041955         WO-A1-2012/086589**
**JP-A- 2005 144 761      JP-A- 2006 219 518**
**JP-A- 2007 276 421      JP-A- 2007 276 421**

(52) Cooperative Patent Classification (CPC): (Cont.)
C08J 2367/00; C08J 2367/02; C08J 2377/00;
C08J 2377/02; C08J 2429/04; C08J 2433/02

**Description**

Technical Field

The present invention relates to a gas barrier laminate having excellent gas barrier property even under high humidity, to a packaging material comprising the gas barrier laminate, and to a method for producing the gas barrier laminate.

Background Art

Plastic films such as polyamide film are excellent in strength, transparency and formability, and accordingly are used as packaging materials in a wide range of applications. However, these plastic films are large in the permeability for a gas such as oxygen, and hence when these plastic films are used for packaging common food, retort processed food, cosmetics, medical supplies, agricultural chemicals and the like, long-term storage of such packaged objects may cause the deterioration of the contents of the packages due to the gas such as oxygen penetrating through the film. Accordingly, the plastic films to be used in packaging applications are required to have gas barrier property, and required to have gas barrier property under high humidity in packaging of water-containing food or the like.

As a method for imparting gas barrier property to a plastic film, there is a method in which a gas barrier layer is laminated on the film, and a layer constituted with a polycarboxylic acid polymer, a polyalcohol polymer and a metal compound is known to be used as the gas barrier layer.

For example, Patent Literature 1 describes, as a method for producing a gas barrier laminate having gas barrier property even under high humidity, a method in which a gas barrier laminate (1) formed by laminating a plastic substrate, a gas barrier layer (D) and a polymer layer (F) containing a di- or higher-valent metal compound (E) is heat treated in the presence of water to produce a gas barrier laminate (3).

The gas barrier layer (D) is described to be formed of a coating material (C) for forming a gas barrier layer including a polyvinyl alcohol (A) and an ethylene-maleic acid copolymer (B).

The polymer layer (F) containing the di- or higher-valent metal compound (E) is described to be laminated at least on one surface of the gas barrier layer (D), and to be laminated as an undercoat layer (F1) positioned between the plastic substrate and the gas barrier layer (D).

Patent Literature 2 describes a method for producing a gas barrier laminate that exhibits excellent gas barrier properties, even under conditions of high humidity.

However, the method of Patent Literature 1 performs a pressurization treatment using an autoclave, in water containing a metal compound after the formation of the gas barrier layer, and thus finds difficulty in continuous implementation thereof and is poor in productivity.

In Patent Literature 1, the undercoat layer is formed by applying a solvent-type coating material followed by drying, and then the gas barrier layer is formed by applying an aqueous coating material followed by drying. Accordingly, the method of Patent Literature 1 sometimes requires anti-explosion equipment, or sometimes requires a plurality of times of coating, to be disadvantageous in economic efficiency or productivity.

With respect to the method of Patent Literature 1, the present inventors investigated a simultaneous application of a solvent-type coating material for forming an undercoat layer and an aqueous coating material for forming a gas barrier layer by using, for example, a curtain coater, and consequently found the occurrence of unevenness in the coating film at the time of drying, and obtained a laminate developing no gas barrier property.

The present inventors also investigated a simultaneous application of an aqueous coating material for forming an undercoat layer in place of the solvent-type coating material and an aqueous coating material for forming a gas barrier layer by using, for example, a curtain coater, and an application of an aqueous coating material for forming an undercoat layer followed by drying, combined with a successive application of an aqueous coating material for forming a gas barrier layer, and obtained laminates each developing no gas barrier property.

Citation List

Patent Literature

Patent Literature 1: JP2004-322626A
Patent Literature 2: EP1614532A1

Summary of Invention

Technical Problem

The technical problem of the present invention is to solve the above described problems and to provide a gas barrier laminate excellent in productivity and economic efficiency, and having excellent gas barrier property even under high humidity.

Solution to Problem

The present inventors made a diligent study on the above-described problems, and consequently have reached the present invention by discovering that a laminate formed by using a plastic substrate (I) including a metal compound in a specific amount and by laminating a gas barrier layer (II) including a polycarboxylic acid on the plastic substrate (I) has excellent gas barrier property.

The present invention is defined by the appended claims.

Various aspects of the present invention are as described below.

In a first aspect, the present invention relates to a gas barrier laminate including a gas barrier layer (II) laminated on a plastic substrate (I), wherein a thermoplastic resin constituting the plastic substrate (I) is a polyamide resin or a polyester resin, the plastic substrate (I) includes a metal compound in a content of 0.1 to 70% by mass, the metal compound being selected from magnesium oxide and magnesium carbonate, and the gas barrier layer (II) includes a polycarboxylic acid.

In the gas barrier laminate according to said first aspect, the plastic substrate (I) may be a multilayer film, and at least one layer of the multilayer film includes the metal compound in a content of 0.1 to 70% by mass.

In the gas barrier laminate according to said first aspect, the polycarboxylic acid is preferably ethylene-maleic acid copolymer (EMA).

In the gas barrier laminate according to said first aspect, the gas barrier layer (II) preferably includes a polyalcohol.

Preferably, after a hydrothermal treatment at 95°C for 30 minutes, the oxygen permeability in an atmosphere of 20°C and a relative humidity of 65% of the gas barrier laminate according to said first aspect is 300 ml/(m$^2$·day·MPa) or less.

Preferably, the gas barrier laminate according to said first aspect is simultaneously or successively biaxially stretched.

In a second aspect, the present invention relates to a packaging bag including the gas barrier laminate according to the first aspect of the present invention.

In a third aspect, the present invention relates to a method for producing the gas barrier laminate according to the first aspect of the invention, the method comprising :

melting a thermoplastic resin including a metal compound as mixed therein by heat and extruding the heat melted thermoplastic resin into a film shape, with an extruder;
solidifying the extruded, heat melted thermoplastic resin by cooling so as to obtain an unstretched film as a plastic substrate (I);
applying a coating liquid for forming a gas barrier layer (II) to the unstretched film so as to form a gas barrier layer (II) thereon to obtain a laminate; and
simultaneously biaxially stretching the obtained laminate in the longitudinal direction (MD) and the transverse direction (TD) with a tenter-type biaxial stretching machine.

In a fourth aspect, the present invention relates to a method for producing the gas barrier laminate according to the first aspect of the present invention, said the method comprising :

melting a thermoplastic resin including a metal compound as mixed therein by heat and extruding the heat melted thermoplastic resin into a film shape, with an extruder;
solidifying the extruded, heat melted thermoplastic resin by cooling so as to obtain an unstretched film as a plastic substrate (I);
stretching the obtained unstretched film in the longitudinal direction (MD) to obtain a longitudinally stretched film:

applying a coating liquid for forming a gas barrier layer to the longitudinally stretched film so as to form the gas barrier layer (II) thereon; and then
stretching the resulting film having the gas barrier layer (II) in the transverse direction (TD).

Advantageous Effects of Invention

According to the present invention, it is possible to provide a gas barrier laminate being excellent in productivity and economic efficiency, and having excellent gas barrier property even under high humidity.

Specifically, the metal compound-containing plastic substrate in the present invention can be produced only by adding the metal compound to the material of the plastic substrate, and thus, it is possible to omit a conventionally adopted step of laminating a metal compound-containing layer on a substrate. Accordingly, the gas barrier laminate is obtained with a smaller number of steps than the conventional number of steps, and hence the gas barrier laminate thus obtained offers industrially extremely significant merit from the viewpoint of productivity and cost. Additionally, the obtained gas barrier laminate has excellent gas barrier property even under high humidity.

Description of Embodiments

Hereinafter, the present invention is described in detail.

The gas barrier laminate of the present invention includes a gas barrier layer (II) laminated on a plastic substrate (I), and the plastic substrate (I) is required to include a metal compound.

In the present disclosure, according to a general aspect which is not part of the claimed invention but which is useful to understand the claimed invention, examples of the metal constituting the metal compound include, without being particularly limited to: monovalent metals such as lithium, sodium, potassium, rubidium and cesium; and di- or more-valent metals such as magnesium, calcium, zirconium, zinc, copper, cobalt, iron, nickel and aluminum. In said general aspect, among these metals, from the viewpoint of the easiness in reaction with a carboxylic acid, metals having high ionization tendency are preferable, and from the viewpoint of the gas barrier property, monovalent and divalent metals are preferable. Specifically, in said general aspect, the metal constituting the metal compound is preferably lithium, sodium, potassium, magnesium, calcium or zinc, and more preferably magnesium, calcium or zinc. In said general aspect, two or more types of metals may also be used, without being limited to one type of metal.

In said general aspect, the metal compound is a compound including one of the above-described metals. In said general aspect, examples of such a metal compound include: oxides, hydroxides, inorganic salts such as halides, carbonates, hydrogencarbonates, phosphates and sulfates; carboxylic acid salts such as acetates, formates, stearates, citrates, malates and maleates; and organic acid salts such as sulfonates. In said general aspect, among these, oxides and carbonates are preferable. Alternatively, in said general aspect, as a metal compound, a metal as a single substance may also be used.

In said general aspect, among the above-described metal compounds, examples of preferable metal compounds may include: lithium carbonate, sodium hydrogencarbonate, magnesium oxide, magnesium carbonate, magnesium hydroxide, magnesium acetate, calcium oxide, calcium carbonate, calcium hydroxide, calcium chloride, calcium phosphate, calcium sulfate, calcium acetate, zinc acetate, zinc oxide and zinc carbonate. According to said general aspect, from the viewpoint of the gas barrier property, preferable are divalent metal compounds such as magnesium oxide, magnesium hydroxide, magnesium salts such as magnesium carbonate and magnesium acetate, calcium carbonate, calcium acetate, zinc oxide and zinc acetate. According to said general aspect, from the viewpoint of transparency of the plastic substrate (I), preferable are monovalent metal compounds such as lithium carbonate and sodium hydrogencarbonate, magnesium oxide, magnesium hydroxide and magnesium salts such as magnesium carbonate. In said general aspect, these may be used each alone, or alternatively two or more of these may be added together.

In the present invention, the metal compound is selected from magnesium oxide and magnesium carbonate.

The metal compound is preferably in a form of a powder, and the average particle size of the powder is not particularly limited, but is preferably 0.001 to 10.0 μm, more preferably 0.005 to 5.0 μm, furthermore preferably 0.01 to 2.0 μm and particularly preferably 0.05 to 1.0 μm. The smaller the average particle size of the metal compound, the more preferable because the haze of the plastic substrate (I) can be made smaller. However, a metal compound having an average particle size of less than 0.001 μm is large in surface area, hence tends to aggregate, and sometimes allows coarse aggregates to be scattered in the film to degrade the mechanical properties of the substrate. On the other hand, the plastic substrate (I) containing a metal compound having an average particle size exceeding 10.0 μm is high in the frequency of breakage at the time of film formation, and thus tends to degrade the productivity.

By applying surface treatment such as inorganic treatment or organic treatment to the metal compound, the metal compound can be improved in, for example, dispersibility, weatherability, wettability with thermoplastic resin, heat resistance and transparency. Examples of the inorganic treatment include alumina treatment, silica treatment, titania treatment, zirconia treatment, tin oxide treatment, antimony oxide treatment and zinc oxide treatment. Examples of the organic treatment include treatments using: fatty acid compounds; polyol compounds such as pentaerythritol and trimethylolpropane; amine compounds such as triethanolamine and trimethylolamine; and silicone-based compounds such as silicone resin and alkylchlorosilane.

The content of the metal compound in the plastic substrate (I) is required to be 0.1 to 70% by mass, and is preferably 0.1 to 50% by mass, more preferably 0.2 to 20% by mass and furthermore preferably 0.2 to 5% by mass. From the viewpoint of haze, the content of the metal compound in the plastic substrate (I) is preferably less than 5% by mass. When the content of the metal compound in the plastic substrate (I) is 0.1 to 70% by mass, the obtained gas barrier laminate can acquire excellent gas barrier property. However, when the content of the metal compound in the plastic substrate (I) is less 0.1% by mass, the amount of the cross-linked structure formed by reaction with the polycarboxylic acid in the gas barrier layer (II) is small, and the obtained gas barrier laminate is degraded in gas barrier property. On the other hand, when the content of the metal compound in the plastic substrate (I) exceeds 70% by mass, the plastic substrate (I) is high in the frequency of breakage in the stretching at the time of film formation, and tends to be degraded in productivity and also tends to be degraded in mechanical properties.

The method for including the metal compound in the plastic substrate (I) is not particularly limited, and the metal compound can be mixed at an optional time in the production process of the plastic substrate (I). Examples of the method for including the metal compound in the plastic substrate (I) include: a method in which the metal compound is added when the thermoplastic resin constituting the plastic substrate (I) is polymerized; a method in which the thermoplastic resin and the metal compound are kneaded with each other by using an extruder; and a method (masterbatch method) in which a masterbatch is produced by mixing and kneading the metal compound in a high concentration, and the resulting masterbatch is added to and diluted in the thermoplastic resin. In the present invention, the masterbatch method is preferably adopted.

In the present disclosure, according to a general aspect which is not part of the claimed invention but which is useful to understand the claimed invention, examples of the thermoplastic resin constituting the plastic substrate (I) include: polyolefin resins such as polyethylene, polypropylene and ionomer; polyamide resins such as nylon 6, nylon 66, nylon 46, nylon MXD6 and nylon 9T; polyester resins such as polyethylene terephthalate, polyethylene isophthalate, polyethylene naphthalate, polytrimethylene terephthalate, polytrimethylene naphthalate, polybutylene terephthalate, polybutylene naphthalate and polylactic acid; polyvinyl chloride resin, polyethylene resin, polycarbonate resin, polyarylate resin, ethylene-vinyl acetate copolymer and ethylene-vinyl alcohol copolymer; and mixtures of these. Among these thermoplastic resins, polyamide resins are preferable because when packaging bags are constituted with polyamide resins, the packaging bags are excellent in piercing strength and impact resistance, and polyester resins are preferable because when packaging bags are constituted with polyester resins, the packaging bags are excellent in heat resistance and economic efficiency.

In the present invention, a thermoplastic resin constituting the plastic substrate (I) is a polyamide resin or a polyester resin.

To the thermoplastic resin, if necessary, one or two or more of the following additives may be added within a range or ranges not imparting adverse effects to the performances of the plastic substrate (I): a heat stabilizer, an antioxidant, a reinforcing material, a pigment, a degradation preventing agent, a weathering agent, a flame retardant, a plasticizer, a preservative agent, an ultraviolet absorber, an antistatic agent and an antiblocking agent. To the thermoplastic resin, inorganic particles other than the metal compound or an organic lubricant may also be added, for example, for the purpose of improving the slippage of the plastic substrate (I); in particular, it is preferable to add silica.

The thickness of the plastic substrate (I) can be appropriately selected according to the mechanical strength required by the obtained gas barrier laminate. Because of the mechanical strength and the easiness in handling, the thickness of the plastic substrate (I) is preferably 5 to 100 $\mu$m and more preferably 10 to 30 $\mu$m. When the thickness of the plastic substrate (I) is less than 5 $\mu$m, the plastic substrate (I) tends to acquire insufficient mechanical strength and to be degraded in piercing strength.

The plastic substrate (I) may be any single layer structured film or any multilayer structured film that includes a metal compound and a thermoplastic resin. When the plastic substrate (I) is a multilayer film, at least one layer thereof is required to include the metal compound in a content of 0.1 to 70% by mass. Hereinafter, the layer including the metal compound in a content of 0.1 to 70% by mass in the multilayer film, or the single layer film including the metal compound is sometimes referred to as a "metal-containing layer (M)," and the layer(s) other than the "metal-containing layer (M)" in the multilayer film is sometimes referred to as the "resin layer(s) (R)."

When the plastic substrate (I) is a multilayer film, examples of the structure of the obtained gas barrier laminate include the structures in which the gas barrier layer(s) (II) and the metal-containing layer(s) (M) of the plastic substrate (I) are brought into contact with each other, such as (R)/(M)/(II), (M)/(R)/(M)/(II) and (II)/(M)/(R)/(M)/(II). These structures each allow the gas barrier layer(s) (II) and the metal-containing layer(s) (M) to be brought into contact with each other so as to facilitate the reaction between the polycarboxylic acid in the gas barrier layer(s) (II) and the metal compound in the metal-containing layer(s) (M), and hence allow the gas barrier property to be obtained efficiently. Among these structures, in consideration of the production apparatus and the production operability, the structure (R)/(M)/(II) is preferable.

Examples of the structure of the obtained gas barrier laminate also include the structures in which the gas barrier layer(s) (II) and the resin layer(s) (R) of the plastic substrate (I) are brought into contact with each other, such as (M)/(R)/(II), (R)/(M)/(R)/(II) and (II)/(R)/(M)/(R)/(II). Among these structures, in consideration of the production apparatus and the production operability, the structure (M)/(R)/(II) is preferable.

The thickness constitution ratio between the metal-containing layer(s) (M) and the resin layer(s) (R) constituting the multilayer film is not particularly limited; the ratio ((Rt)/(Mt)) between the total thickness (Mt) of the metal-containing layer(s) (M) and the total thickness of the resin layer(s) (Rt) is preferably 1/1000 to 1000/1; because of the easiness in controlling the thickness of each of the layers, the ratio ((Rt)/(Mt)) is more preferably 1/100 to 100/1, and furthermore preferably 1/10 to 1011.

To the thermoplastic resin constituting the resin layer(s) (R), the above-described additives may also be added; for the purpose of improving the slippage, for example, silica is preferably added to the resin layer (R) to be the outermost layer of the gas barrier laminate.

The gas barrier layer(s) (II) constituting the gas barrier laminate of the present invention is required to include a polycarboxylic acid. The polycarboxylic acid in the gas barrier layer(s) (II) can develop the gas barrier property through the reaction with the metal compound in the plastic substrate (I).

The polycarboxylic acid in the present invention is a compound or a polymer having two or more carboxyl groups in the molecule thereof, and these carboxyl groups may also form anhydride structures.

Specific examples of the polycarboxylic acid may include: 1,2,3,4-butanetetracarboxylic acid, polyacrylic acid, polymethacrylic acid, acrylic acid-methacrylic acid copolymer, acrylic acid-maleic acid copolymer, polymaleic acid, olefin-maleic acid copolymers such as ethylene-maleic acid copolymer, polysaccharides having carboxyl groups in the side chains thereof such as alginic acid, and carboxyl group-containing polyamides and polyesters. The above-described polycarboxylic acids can be used each alone or in combinations of two or more thereof.

When the polycarboxylic acid is a polymer, the weight average molecular weight thereof is preferably 1,000 to 1,000,000, more preferably 10,000 to 150,000 and furthermore preferably 15,000 to 110,000. When the weight average molecular weight of the polycarboxylic acid is too low, the obtained gas barrier layer (II) is fragile; on the other hand, when the weight average molecular weight of the polycarboxylic acid is too high, the handleability of the polycarboxylic acid is impaired, and the aggregates of the polycarboxylic acid are generated in the below-described coating liquid for forming the gas barrier layer (II) to possibly impair the gas barrier property of the obtained gas barrier layer (II) as the case may be.

In the present invention, among the above-described polycarboxylic acids, polyacrylic acid or the olefin-maleic acid copolymer, in particular, ethylene-maleic acid copolymer (hereinafter, sometimes abbreviated as EMA) is preferably used from the viewpoint of the gas barrier property. EMA is obtained by polymerizing maleic anhydride and ethylene by a heretofore known method such as solution radical polymerization.

The maleic acid units in the olefin-maleic acid copolymer tend to take maleic anhydride structures, in the dried state, formed by the cyclodehydration of the adjacent carboxyl groups, and take maleic acid structures through ring opening in a wet state or in an aqueous solution. Accordingly, in the present invention, unless otherwise specified, the maleic acid unit and the maleic anhydride unit are collectively referred to as the maleic acid unit.

The proportion of the maleic acid units in EMA is preferably 5 mol% or more, more preferably 20 mol% or more, furthermore preferably 30 mol% or more and most preferably 35 mol% or more.

The weight average molecular weight of EMA is preferably 1,000 to 1,000,000, more preferably 3,000 to 500,000, furthermore preferably 7,000 to 300,000 and particularly preferably 10,000 to 200,000.

In the present invention, the gas barrier layer (II) preferably includes a polyalcohol. The inclusion of a polyalcohol in the gas barrier layer (II) allows the polycarboxylic acid in the gas barrier layer (II) to react with the polyalcohol as well as the metal compound in the plastic substrate (I), and consequently can improve the gas barrier property.

The polyalcohol is a compound having two or more hydroxyl groups in the molecule thereof. Examples of such a low molecular weight compound include sugar alcohols such as glycerin and pentaerythritol; monosaccharides such as glucose; disaccharides such as maltose; and oligosaccharides such as galactooligosaccharide. Examples of such a polymer compound include: polyvinyl alcohol, ethylene-vinyl alcohol copolymer and polysaccharides such as starch. The above-described polyalcohols can be used each alone or in combinations of two or more thereof.

The degree of saponification of polyvinyl alcohol or ethylene-vinyl alcohol copolymer is preferably 95 mol% or more and more preferably 98 mol% or more. The average degree of polymerization of polyvinyl alcohol or ethylene-vinyl alcohol copolymer is preferably 50 to 2,000 and more preferably 200 to 1,000.

The polycarboxylic acid and the polyalcohol in the gas barrier layer (II) are included in such a way that the molar ratio (OH group/COOH group) between the OH groups and the COOH groups is preferably 0.01 to 20, more preferably 0.01 to 10, furthermore preferably 0.02 to 5 and most preferably 0.04 to 2.

In the present invention, the gas barrier layer (II) also preferably includes a polyacrylamide, a polymethacrylamide or a polyamine. The inclusion of these compounds in the gas barrier layer (II) allows the polycarboxylic acid in the gas barrier layer (II) to react with these compounds as well as the metal compound in the plastic substrate (I), and consequently can improve the gas barrier property.

The polyamine has as the amino groups in the molecule thereof two or more amino groups of at least one type selected from the primary type and the secondary type; specific examples of such a polyamide include: polyallylamine, polyvinylamine, branched polyethyleneimine, linear polyethyleneimine, polylysine, polysaccharides having amino groups in the side chains such as chitosan, and polyamides having amino groups in the side chains thereof such as polyarginine.

The weight average molecular weight of the polyamine is preferably 5,000 to 150,000. When the weight average molecular weight of the polyamine is too low, the obtained gas barrier layer (II) is fragile; on the other hand, when the weight average molecular weight of the polyamine is too high, the handleability of the polyamine is impaired, and the aggregates of the polycarboxylic acid are generated in the below-described coating liquid for forming the gas barrier layer (II) to possibly impair the gas barrier property of the obtained gas barrier layer (II) as the case may be.

The mass ratio (polyamine/polycarboxylic acid) between the polyamine and the polycarboxylic acid in the gas barrier layer (II) is preferably 12.5/87.5 to 27.5/72.5. The mass proportion of the polyamine lower than the proportion derived from the above-described ratio results in insufficient cross-linking of the carboxyl groups in the polycarboxylic acid; on the contrary, mass proportion of the polyamine higher than the proportion derived from the above-described ratio results in insufficient cross-linking of the amino groups in the polyamine; in either case, the obtained gas barrier laminate is sometimes poor in gas barrier property.

The gas barrier layer (II) in the present invention may include a cross-linking agent. The inclusion of the cross-linking agent enhances the gas barrier property.

The content of the cross-linking agent in the gas barrier layer (II) is preferably 0.1 to 30 parts by mass and more preferably 1 to 20 parts by mass in relation to 100 parts by mass of the polycarboxylic acid.

Examples of the cross-linking agent include compounds having a self-cross-linking property, and compounds each having in the molecule thereof two or more functional groups to react with carboxyl groups; when the gas barrier layer (II) includes a polyalcohol, examples of the cross-linking agent may include compounds each having in the molecule thereof two or more functional groups to react with the hydroxyl groups. Specific examples of the cross-linking agent include isocyanate compounds, melamine compounds, urea compounds, epoxy compounds, carbodiimide compounds, zirconium salt compounds such as ammonium zirconium carbonate, and metal alkoxides. These cross-linking agents may also be used in combination of two or more thereof.

Metal alkoxides are the compounds including alkoxy groups bonded to metal atoms, wherein in place of a fraction of the alkoxy groups, halogens and alkyl groups substituted with functional groups having reactivity with carboxyl groups may also be bonded. Herein, examples of the metals include atoms of Si, Al, Ti and Zr; examples of the halogen include chlorine, iodine and bromine; examples of the functional group having reactivity with carboxyl groups include an epoxy group, an amino group, an isocyanate group and a ureido group; examples of the alkyl group include a methyl group, an ethyl group, an n-propyl group, an isopropyl group, an n-butyl group and an isobutyl group. Examples of such compounds include: alkoxysilane compounds such as tetramethoxysilane, tetraethoxysilane, chlorotriethoxysilane, 3-glycidoxypropyltrimethoxysilane, 3-glycidoxypropyltriethoxysilane, 3-aminopropyltrimethoxysilane, 3-aminopropyltriethoxysilane, 3-ureidopropyltriethoxysilane and 3-isocyanatepropyltriethoxysilane; titanium alkoxide compounds such as titanium tetraisopropoxide and titanium tetraethoxide; aluminum alkoxide compounds such as aluminum triisopropoxide; and zirconium alkoxide compounds such as zirconium tetraisopropoxide.

As these metal alkoxides, partially or wholly hydrolyzed metal alkoxides, partially hydrolyzed and condensed metal alkoxides, wholly hydrolyzed and partially condensed metal alkoxides, or combinations of these can also be used.

When the above-described metal alkoxide and the polycarboxylic acid are mixed with each other, sometimes both of these react with each other to make the coating operation difficult; accordingly, preferably after the hydrolysis condensate of the metal alkoxide is beforehand formed, the hydrolysis condensate and the polycarboxylic acid are mixed with each other. As the method for forming the hydrolysis condensate, the techniques used in heretofore known sol-gel methods can be applied.

In the gas barrier layer (II) in the present invention, as long as the gas barrier property or the adhesiveness with the plastic substrate (I) is not significantly impaired, the following may be added: a heat stabilizer, an antioxidant, a reinforcing material, a pigment, a degradation preventing agent, a weathering agent, a flame retardant, a plasticizer, a release agent, a lubricant, a preservative agent, an antifoaming agent, a wetting agent and a viscosity regulating agent.

Examples of the heat stabilizer, the antioxidant and the degradation preventing agent include: hindered phenols, phosphorus compounds, hindered amines, sulfur compounds, copper compounds, and halides of alkali metals; these may also be used as mixtures thereof.

Examples of the reinforcing material include: clay, talc, wollastonite, silica, alumina, calcium silicate, sodium aluminate, sodium aluminosilicate, magnesium silicate, glass balloon, carbon black, zeolite, montmorillonite, hydrotalcite, fluoromica, metal fiber, metal whisker, ceramic whisker, potassium titanate whisker, boron nitride, graphite, glass fiber, carbon fiber, fullerenes (such as C60 and C70), and carbon nanotube.

In the present invention, the thickness of the gas barrier layer (II) laminated on the plastic substrate (I) is preferably thicker than 0.05 $\mu$m for the purpose of sufficiently enhancing the gas barrier property of the gas barrier laminate, and is preferably thinner than 5.0 $\mu$m from the viewpoint of economic efficiency.

The gas barrier layer (II) in the present invention can be formed by applying a coating liquid for forming the gas barrier layer (II) to the plastic substrate (I) followed by drying.

The coating liquid is preferably aqueous from the viewpoint of workability, and hence the polycarboxylic acid, the polyalcohol and the polyamine constituting the coating liquid are preferably water-soluble or water-dispersible, and more preferably water-soluble.

In the present invention, when the aqueous coating liquid is prepared by mixing the polycarboxylic acid and the polyalcohol, 0.1 to 20 equivalent% of an alkali compound is preferably added in relation to the carboxyl groups of the polycarboxylic acid. When the content of the carboxyl groups is large in the polycarboxylic acid, the polycarboxylic acid is high in hydrophilicity, and hence an aqueous solution of the polycarboxylic acid can be prepared without adding any alkali compound. However, addition of an appropriate amount of an alkali compound can drastically improve the gas barrier property of the obtained gas barrier laminate. The alkali compound may be any alkali compound capable of neutralizing the carboxyl groups of the polycarboxylic acid, and the addition amount of the alkali compound is preferably 0.1 to 20 mol% in relation to the carboxyl groups of the polycarboxylic acid.

The preparation of the coating liquid can be performed by using a dissolution pot or the like, equipped with a stirrer, according to a heretofore known method; for example, preferable is a method in which the polycarboxylic acid and the polyalcohol are separately prepared as aqueous solutions, and the aqueous solutions thus obtained are mixed together before coating. In this case, addition of the above-described alkali compound to the aqueous solution of the polycarboxylic acid enables to improve the stability of this aqueous solution.

In the present invention, when the aqueous coating liquid is prepared by mixing the polycarboxylic acid and the polyamine, it is preferable to add a base to the polycarboxylic acid in order to suppress the gelation. Any base that does not disturb the gas barrier property of the obtained gas barrier laminate may be adopted; examples of such a base include inorganic substances such as sodium hydroxide, calcium hydroxide and ammonia and organic substances such as methylamine and diethanolamine; among these, ammonia is preferable because of being easily evaporated by drying or heat treatment. The addition amount of the base is preferably 0.6 equivalent or more, more preferably 0.7 equivalent or more and furthermore preferably 0.8 equivalent or more in relation to the carboxyl groups of the polycarboxylic acid. When the addition amount of the base is small, sometimes the coating liquid is gelated to make it difficult to form the gas barrier layer (II) on the plastic substrate (I).

The method for applying the coating liquid for forming the gas barrier layer (II) to the plastic substrate (I) is not particularly limited; for example, air knife coating, kiss-roll coating, metalling bar coating, gravure roll coating, reverse roll coating, dip coating, die coating, or methods combining these methods can be used.

After the coating liquid for forming the gas barrier layer (II) is applied to the plastic substrate (I), immediately heat treatment may be conducted so as to simultaneously perform the dry coating film formation and the heat treatment, or alternatively after the application, the dry coating film is formed by evaporating moisture and the like by blowing hot air with a dryer or the like or by irradiation with infrared ray or the like, and then heat treatment may be performed. As long as the state of the gas barrier layer (II) or the physical properties such as the gas barrier property are not particularly disturbed, it is preferable to perform heat treatment immediately after the application.

Examples of the heat treatment method include, without being particularly limited to: a method in which heat treatment is performed in a dry atmosphere in an oven or the like. For example, in consideration of the shortening of the step, it is preferable to perform the stretching of the plastic substrate (I) after the coating liquid for forming the gas barrier layer (II) is applied.

In any of the above-described cases, it is preferable to subject the plastic substrate (I) with the gas barrier layer (II) formed thereon to a heat treatment in a heating atmosphere at 100°C or higher for 5 minutes or less.

When the gas barrier layer (II) includes the polycarboxylic acid and the polyalcohol, the proportions of the polycarboxylic acid and the polyalcohol, the presence or absence of the additive components and the contents of the additive components affect the gas barrier layer (II), and hence, with some reservations, the heat treatment temperature after the application of the coating liquid is preferably 100 to 300°C, more preferably 120 to 250°C, furthermore preferably 140 to 240°C and particularly preferably 160 to 220°C. When the heat treatment temperature is too low, sometimes the cross-linking reaction between the polycarboxylic acid and the polyalcohol is not allowed to proceed sufficiently and accordingly it is difficult to obtain a laminate having sufficient gas barrier property; on the other hand, when the heat treatment temperature is too high, the gas barrier layer (II) or the like is possibly embrittled.

The heat treating time is preferably 5 minutes or less, more preferably 1 second to 5 minutes, furthermore preferably 3 seconds to 2 minutes and particularly preferably 5 seconds to 1 minute. When the heat treatment time is too short, the above-described cross-linking reaction is not allowed to proceed sufficiently, and it is difficult to obtain a laminate having gas barrier property; on the other hand, when the heat treatment time is too long, the productivity is degraded.

The coating liquid for forming the gas barrier layer (II) applied to the plastic substrate (I) may be, if necessary, irradiated before or after the drying with a high energy ray such as an ultraviolet ray, an X-ray or an electron beam. In such a case, a component to crosslink or polymerize by the irradiation with a high energy ray may also be mixed in the coating liquid.

The gas barrier laminate of the present invention has the above-described structure, and hence is excellent in gas barrier property; the gas barrier laminate subjected to a hydrothermal treatment at 95°C for 30 minutes allows the oxygen permeability measured in an atmosphere of 20°C and a relative humidity of 65% to be 300 ml/(m$^2$·day·MPa) or less; the oxygen permeability is preferably $1 \times 10^{-2}$ to 300 ml/(m$^2$·day·MPa), more preferably $1 \times 10^{-2}$ to 200 ml/(m$^2$·day·MPa) and furthermore preferably $1 \times 10^{-2}$ to 100 ml/(m$^2$·day·MPa).

In the gas barrier laminate of the present invention, the tensile strength is preferably 150 MPa or more and more preferably 180 MPa or more. When the tensile strength is less than 150 MPa, the mechanical strength is insufficient and the piercing strength tends to be degraded. The tensile elongation rate is preferably 60% or more and more preferably 80% or more from the same viewpoint as for the tensile strength.

The anti-pinhole property of the gas barrier laminate of the present invention is such that the number of occurrence of pinholes is preferably 100 or less and more preferably 20 or less in the 500 times repeated bending fatigue test in an atmosphere at 5°C.

The anti-pinhole property is specifically evaluated as follows: according to Method 2017 of Fed. Test Method Std. 101C shown in MIL-B-131F, a sample of 12 inches $\times$ 8 inches was held in a cylindrical shape of 3.5 inches in diameter, the initial holding distance was set at 7 inches and the holding distance at the time of the maximum bending was set at 1 inch, the sample was bended 500 times under the condition of 5°C with Gelbo tester manufactured by Rigaku Kogyo Co., Ltd., and subsequently the number of occurrence of pinholes was counted.

In the transparency of the gas barrier laminate of the present invention, the haze is preferably 70% or less, more preferably 50% or less, furthermore preferably 30% or less, particularly preferably 15% or less and most preferably 10% or less. However, depending on the intended application, transparency is not required as the case may be, and hence the haze values are not necessarily limited as described above.

The gas barrier laminate of the present invention can be produced by such a method as follows.

The plastic substrate (I) made of a single layer structured film is obtained, for example, as follows: a thermoplastic resin including as mixed therein a metal compound is melt kneaded in an extruder and extruded from a T-die into a film shape, and cooled and solidified on a rotating cooling drum by a heretofore known casting method such as an air-knife casting method or an electrostatic casting method to yield a film as the plastic substrate (I) in an unstretched state.

The plastic substrate (I) made of a multilayer structured film is obtained, for example, as follows: a thermoplastic resin including as mixed therein a metal compound is melted by heating in an extruder A; another thermoplastic resin is also melted by heating in an extruder B; the two molten resins were superposed on each other in a die, and a film having a two layer structured film such as a film having a structure of metal-containing layer (M)/resin layer (R) film is extruded from a T-die, and cooled and solidified in the same manner as described above, and thus the plastic substrate (I) can be obtained in an unstretched state.

By including a metal compound in the plastic substrate (I) in this way, a conventionally adopted step of laminating a metal compound-containing layer on a substrate can be omitted.

The gas barrier layer (II) is formed by applying with the above-described method the coating liquid for forming the gas barrier layer (II) to the thus obtained single layer structured or multilayer structured unstretched film, the resulting laminate is simultaneously biaxially stretched in the longitudinal direction (MD) and the transverse direction (TD) with a tenter-type biaxial stretching machine, and thus a simultaneously biaxially stretched gas barrier laminate can be obtained.

Alternatively, the obtained unstretched film is stretched in the longitudinal direction (MD), then the coating liquid for forming the gas barrier layer (II) is applied to the longitudinally stretched film to form the gas barrier layer (II), then the resulting film having he gas barrier layer (II) is stretched in the transverse direction (TD), and thus a successively biaxially stretched gas barrier laminate can be obtained.

When the unstretched film is oriented, the stretchability is sometimes degraded in the subsequent step(s), and hence the unstretched film is preferably in a substantially amorphous and non-oriented state.

When a polyamide resin is used as the thermoplastic resin, preferably the unstretched film is transferred to a water tank regulated so as for the temperature not to exceed 80°C, subjected to a water immersion treatment within 5 minutes, and thus subjected to a 0.5 to 15% moisture absorption treatment.

In the case of the uniaxial stretching, the stretching magnification of the film is preferably 1.5 or more; in the case of the longitudinal and transverse biaxial stretching, the stretching magnification is preferably 1.5 or more in each of the longitudinal and transverse directions, and the area magnification is usually preferably 3 or more, more preferably 6 to 20 and furthermore preferably 6.5 to 13. The stretching magnification falling in the above-described range allows a gas barrier laminate excellent in mechanical properties to be obtained.

The film after undergoing the step of stretching treatment is thermally fixed in the tenter having performed the stretching treatment at a temperature of 150 to 300°C, and if necessary, subjected to relaxation treatment in the longitudinal direction and/or the transverse direction in a range from 0 to 10% and preferably in a range from 2 to 6%. In order to reduce the thermal shrinkage rate, it is desirable to optimize the temperature and the time of the thermal fixation, and it is also desirable to perform the thermal relaxation treatment at a temperature lower than the maximum temperature of the thermal fixation treatment.

The stretching method is not particularly limited, but it is preferable to use a simultaneous biaxial stretching method. In general, the simultaneous biaxial stretching method can provide, in combination, practical properties such as mechanical properties, optical properties, thermal dimensional stability and anti-pinhole property. Additionally, in the successive biaxial stretching method performing the transverse stretching after the longitudinal stretching, oriented crystallization of the film proceeds during longitudinal stretching to degrade the stretchability of the thermoplastic resin during the transverse stretching, and thus the frequency of breakage of the film tends to be high when the mixing amount of the metal compound is large. Accordingly, in the present invention, it is preferable to apply water absorption treatment and to adopt a simultaneous biaxial stretching method.

For the purpose of enhancing the gas barrier property, the gas barrier laminate of the present invention can also be treated, after the production of the laminate, in a humidified atmosphere. The humidification treatment can more promote the action between the metal compound in the plastic substrate (I) and the polycarboxylic acid in the gas barrier layer (II). Such a humidification treatment may be performed by allowing the laminate to stand in a high temperature-high humidity atmosphere, or alternatively, by bringing the laminate into direct contact with high-temperature water. The humidification treatment conditions are different depending on the intended various purposes; in the case where the laminate is allowed to stand in a high temperature-high humidity atmosphere, preferably the temperature is 30 to 130°C and the relative humidity is 50 to 100%. In the case where the laminate is brought into direct contact with high-temperature water, preferably the temperature is approximately 30 to 130°C (100°C or higher under pressurized conditions). The humidification treatment time is different depending on the treatment conditions, and in general, a range from a few seconds to several hundred hours is selected.

The gas barrier laminate of the present invention may, if necessary, be subjected to a surface treatment such as corona discharge treatment.

The gas barrier laminate of the present invention can be modified into various laminated films by laminating a resin layer(s) such as a sealant layer.

Examples of the resin to be used as the sealant include: low density polyethylene, medium density polyethylene, high density polyethylene, linear low density polyethylene, polypropylene, polyethylene/polypropylene copolymer, ethylene-vinyl acetate copolymer, ionomer resin, ethylene-acrylic acid/methacrylic acid copolymer, ethylene-acrylic acid/methacrylic acid ester copolymer and polyvinyl acetate-based resins; preferable are polyolefin resins high in heat seal strength and strength of material itself such as polyethylene, polypropylene and polyethylene/polypropylene copolymer. These resins may be used each alone, as copolymers with other resins or as mixtures prepared by melting and mixing with other resins, and moreover, may be acid-modified.

Examples of the method for forming a sealant layer on the gas barrier laminate include: a method in which a film or sheet made of a sealant resin is laminated on the gas barrier laminate through the intermediary of an adhesive; and a method in which a sealant resin is extrusion-laminated on the gas barrier laminate. In the former method, the film or sheet made of a sealant resin may be either in an unstretched state or in a stretched state with a low magnification, and is practically, preferably in an unstretched state.

The thickness of the sealant layer is not particularly limited, but is preferably 20 to 100 $\mu$m and more preferably 40 to 70 $\mu$m.

Packaging bags can be prepared by using the gas barrier laminate of the present invention, and the packaging bags can be filled with and package the contents such as food and beverages, fruits, juice, drinking water, sake, prepared food, fishery paste products, refrigerated food, meat products, cooked food, boiled rice cakes, liquid soap, seasonings, other various foods and beverages, liquid detergents, cosmetics, and chemicals.

Examples

Next, the present invention is more specifically described with reference to Examples, but the present invention is not limited to these Examples.

1. Measurement Method

(1) Average Particle Size

The value of the particle size at cumulative 50% on the particle size distribution (volume distribution) curve measured with a laser-type particle size analyzer "Microtrac HRA" (manufactured by Nikkiso Co., Ltd.) was determined. A sample for the average particle size measurement was prepared by adding 50 g of IPA in relation to 0.5 g of each of the metal compounds, and by performing an ultrasonic dispersion treatment for 3 minutes.

(2) Thicknesses of Individual Layers

Each of the obtained gas barrier laminates was allowed to stand in an environment of 23°C and 50% RH for 2 hours or more, and then the cross section of the film was observed with a scanning electron microscope (SEM), and thus the thicknesses of the individual layers were measured.

(3) Oxygen Permeability

Unless otherwise specified, each of the obtained gas barrier laminates was subjected to a hydrothermal treatment under the conditions of 95°C and 30 minutes, then allowed to stand for 2 hours or more in an environment of 23°C and 50% RH, and then, subjected to the measurement of the oxygen permeability in an atmosphere of a temperature of 20°C and a relative humidity of 65% with an oxygen barrier measurement apparatus (OX-TRAN 2/20) manufactured by Mocon, Inc. The unit is ml/(m$^2$·day·MPa).

It is to be noted that, in each of Examples 32 to 34 and Comparative Example 3, the obtained gas barrier laminate was treated at 40°C and 90% RH for 3 days, then allowed to stand in an environment of 23°C and 50%RH for 2 hours or more, and then subjected to the measurement of the oxygen permeability in an atmosphere of a temperature of 20°C and a relative humidity of 65%.

(4) Haze

The total light transmittance (Tt) and the diffuse transmittance (Td) of each of the gas barrier laminates was measured with a haze meter (NDH 2000) manufactured by Nippon Denshoku Industries Co., Ltd. according to JIS K 7105, and the haze was calculated on the basis of the following formula:

$$\text{Haze (\%)} = (Td/Tt) \times 100$$

2. Materials

The materials used in following Examples and Comparative Examples are as follows.

(1) Thermoplastic resins for Constituting Plastic Substrate (I)

- PA6: Nylon 6 resin (A1030BRF, relative viscosity: 3.0, manufactured by Unitika Ltd.)
- PET: Polyethylene terephthalate resin (UT-CBR, limiting viscosity: 0.62, manufactured by Unitika Ltd.)

(2) Metal Compounds for Constituting Plastic Substrate (I)

- MgO: Magnesium oxide (PUREMAG FNM-G, average particle size: 0.4 μm, manufactured by Tateho Chemical Industries Co., Ltd.)
- MgO-2: Magnesium oxide (TATEHOMAG #H-10, average particle size: 4.9 μm, manufactured by Tateho Chemical Industries Co., Ltd.)
- MgCO$_3$: Magnesium carbonate (MSS, average particle size: 1.2 μm, manufactured by Konoshima Chemical Co., Ltd.)
- CaCO$_3$: Calcium carbonate (Vigot15, average particle size: 0.5 μm, manufactured by Shiraishi Kogyo Kaisha, Ltd.)
- ZnO: Zinc oxide (FINEX-50, average particle size: 0.02 μm, manufactured by Sakai Chemical Industry Co., Ltd.)

(3) Metal Compound Master Chips for Constituting Plastic Substrate (I)

- Master Chip 1:
  A master chip was prepared by kneading 55 parts by mass of PA6 and 45 parts by mass of MgO, and was used when a metal-containing layer (M) having a metal compound content of 15 to 45% by mass was prepared.
- Master Chip 2:
  A master chip was prepared by kneading 25 parts by mass of PA6 and 75 parts by mass of MgO, and was used when a metal-containing layer (M) having a metal compound content exceeding 45% by mass was prepared.
- Master Chip 3:
  A master chip was prepared by kneading 85 parts by mass of PA6 and 15 parts by mass of MgO, and was used when a metal-containing layer (M) having a metal compound content less than 15% by mass was prepared.
- Master Chip 4:
  A master chip was prepared by kneading 85 parts by mass of PET and 15 parts by mass of MgO.

- Master Chip 5:
  A master chip was prepared by kneading 85 parts by mass of PA6 and 15 parts by mass of MgO-2.
- Master Chip 6:
  A master chip was prepared by kneading 85 parts by mass of PA6 and 15 parts by mass of $MgCO_3$.
- Master Chip 7:
  A master chip was prepared by kneading 85 parts by mass of PA6 and 15 parts by mass of $CaCO_3$.
- Master Chip 8:
  A master chip was prepared by kneading 85 parts by mass of PA6 and 15 parts by mass of ZnO.

(4) Polycarboxylic Acid Component in Coating Liquid for Forming Gas Barrier Layer (II)

- EMA Aqueous Solution:
  An EMA aqueous solution prepared by adding EMA (weight average molecular weight: 60,000) and sodium hydroxide to water and dissolving these solutes by heating, and then cooling the resulting solution to room temperature, wherein 10 mol% of the carboxyl groups of EMA were neutralized with sodium hydroxide and the solid content was 15% by mass.
- PAA Aqueous Solution:
  A polyacrylic acid (PAA) aqueous solution prepared by using polyacrylic acid (A10H, number average molecular weight: 200,000, 25% by weight aqueous solution, manufactured by Toagosei Co., Ltd.) and sodium hydroxide, wherein 10 mol% of the carboxyl groups of polyacrylic acid were neutralized with sodium hydroxide and the solid content was 15% by mass.
- P(AA-MA):
  Acrylic acid-maleic anhydride copolymer aqueous solution (resin concentration: 50% by mass, mass average molecular weight: 3,000, manufactured by Aldrich Corp.)

(5) Other Resin Components in Coating Liquid for Forming Gas Barrier Layer (II)

- PVA Aqueous Solution:
  A polyvinyl alcohol (PVA) aqueous solution prepared by adding polyvinyl alcohol (Poval 105, degree of saponification: 98 to 99%, average degree of polymerization: about 500, manufactured by Kuraray Co., Ltd.) to water, and dissolving PVA by heating, and then cooling the resulting solution to room temperature, wherein the solid content was 15% by mass.
- EVOH Aqueous Solution:
  An ethylene-vinyl alcohol copolymer (EVOH) aqueous solution prepared by dissolving ethylene-vinyl alcohol copolymer (Exeval AQ-4105, manufactured by Kuraray Co., Ltd.), wherein the solid content was 10% by mass.
- Starch:
  Soluble starch (manufactured by Wako Pure Chemical Industries, Ltd.)
- PAM:
  Polyacrylamide (reagent, weight average molecular weight: 9,000,000 to 10,000,000, degree of polymerization: $1.27 \times 10^5$ to $1.41 \times 10^5$, manufactured by Kishida Chemical Co., Ltd.).

Example 1

Nylon 6 resin and one of the master chips were mixed so as for the content of magnesium oxide to be 0.1% by mass. The resulting mixture was placed in an extruder, and melted in a cylinder set at 270°C. The melt was extruded from a T-die orifice in a sheet shape, and rapidly cooled by bringing the sheet into close contact with a rotating drum cooled to 10°C to yield a 150-$\mu$m-thick unstretched film of the plastic substrate (I). The obtained unstretched film was transferred to a warm water tank set at 50°C and subjected to a water immersion treatment for 2 minutes.

Next, the PVA aqueous solution and the EMA aqueous solution were mixed so as for the mass ratio (solid content) between PVA and EMA to be 50/50, to yield a coating liquid for forming the gas barrier layer (II) having a solid content of 10% by mass. The coating liquid was applied to one surface of the unstretched film subjected to the water immersion treatment, and then dried.

The edges of the film were held with the grips of the tenter-type simultaneous biaxial stretching machine, and the film was stretched at 180°C in MD and TD, with the magnification of 3.3 in each of MD and TD. Subsequently, the film was heat treated at 210°C for 4 seconds with the relaxation rate in TD set at 5%, and then slowly cooled to room temperature to yield a gas barrier laminate in which on a 15-$\mu$m-thick plastic substrate (I), a 0.3-$\mu$m-thick gas barrier layer (II) was laminated.

Examples 2 to 10, R11 and R12 (Reference Examples not covered by the claimed invention), 13 to 16, 18 and 20 to 34 and Comparative Examples 1 to 4

In each of Examples 2 to 10, R11, R12, 13 to 16, 18 and 20 to 34 and Comparative Examples 1 to 4, an unstretched film of the plastic substrate (I) was obtained in the same manner as in Example 1 except that nylon 6 resin and one of the master chips were mixed so as for the metal compound content described in Table 1 or Table 2 to be obtained, and so as for the thickness after the stretching to be the thickness described in Table 1 or Table 2.

Next, in each of Examples 2 to 10, R11, R12, 13 to 16, 18 and 20 to 34 and Comparative Examples 1 to 4, a coating liquid for forming the gas barrier layer (II) was prepared in the same manner as in Example 1 except that the other resin such as PVA and polycarboxylic acid were allowed to have the types and the mass ratio (solid content) described in Table 1 or Table 2.

In each of Examples 2 to 10, R11, R12, 13 to 16, 18 and 20 to 34 and Comparative Examples 1 to 4, a gas barrier laminate was obtained by applying the obtained coating liquid to the unstretched film followed by drying, and then biaxially stretching the dried film in the same manner as in Example 1 except that the obtained coating liquid was used and the thickness after stretching was allowed to be the thickness described in Table 1 or Table 2.

In Example 22, operations were performed in the same manner as in Example 21 except that magnesium oxide different in average particle size was used. The haze of the laminate of Example 21 was 14.7%, and the haze of the laminate of Example 22 was 46.4%.

In Example 27, polyethylene terephthalate resin (PET) was used as the thermoplastic resin, and accordingly the conditions were further altered as follows. Specifically, an unstretched film was prepared by setting the cylinder temperature at 280°C, and the obtained unstretched film was not subjected to the water immersion treatment. The temperature in the simultaneous biaxial stretching was set at 90°C, and the heat treatment temperature was set at 230°C.

In Example 33, an unstretched film was subjected to simultaneous biaxial stretching, and then the coating liquid for forming the gas barrier layer (II) was applied so as for the thickness after drying to be 0.2 μm.

In Example 34, the coating liquid for forming the gas barrier layer (II) was applied to an unstretched film so as for the thickness after drying to be 0.2 μm, but no simultaneous biaxial stretching was performed.

In Comparative Example 3, the coating liquid for forming the gas barrier layer (II) was not applied to an unstretched film, and no simultaneous biaxial stretching was performed.

Example 17

A coating liquid for forming the gas barrier layer (II) was prepared as follows.

Specifically, a polyacrylic acid (PAA) having a number average molecular weight of 200,000 and polyvinyl alcohol (PVA-105, manufactured by Kuraray Co., Ltd.) were dissolved in distilled water so as for the mass ratio to be 97:3. Next, to the resulting solution, aqueous ammonia was added to neutralize 1.5 mol% of the carboxyl groups of the polyacrylic acid. Thus, a polymer aqueous solution was obtained in which the solid content concentration was 10% by mass and polyacrylic acid and polyvinyl alcohol were included. Next, 68.4 parts by mass of tetramethoxysilane (TMOS) was dissolved in 82.0 parts by mass of methanol, and successively 13.6 parts by mass of γ-glycidoxypropyltrimethoxysilane was dissolved; then, to the resulting solution, 5.13 parts by mass of distilled water and 12.7 parts by mass of 0.1 N hydrochloric acid were added to prepare a sol; while the sol was being stirred, hydrolysis and condensation reaction were performed at 10°C for 1 hour. The obtained sol was diluted with 185 parts by mass of distilled water, and then quickly added to 634 parts by mass of the polymer aqueous solution under stirring to yield a solution.

A gas barrier laminate was obtained in the same manner as in Example 4 except that the solution prepared by the above-described method was used as the coating liquid for forming the gas barrier layer (II).

Example 19

A coating liquid for forming the gas barrier layer (II) was prepared as follows.

Specifically, a polyacrylic acid (PAA) having a number average molecular weight of 200,000 was dissolved in distilled water, and thus a PAA aqueous solution having a solid content concentration in the aqueous solution of 13% by mass was obtained. Successively, a 13% by mass of ammonia aqueous solution was added to the PAA aqueous solution to neutralize 1 mol% of the carboxyl groups of PAA, and thus an aqueous solution of a partially neutralized product of PAA was obtained.

A methanol solution of polyacrylic acid (PAA) was prepared by dissolving 100 parts by mass of PAA having a number average molecular weight of 40,000 in 1064 parts by mass of methanol, and successively, to the methanol solution, 166 parts by mass of γ-aminopropyltrimethoxysilane (APTMOS) was added under stirring. In this way, an APTMOS methanol solution (19-1) was obtained. In the APTMOS methanol solution (19-1), at least a fraction of the amino groups of APTMOS were neutralized by the carboxyl groups of PAA.

Next, a tetramethoxysilane (TMOS) methanol solution was prepared by dissolving 34.5 parts by mass of TMOS in 34.5 parts by mass of methanol. While the temperature of the TMOS methanol solution was being maintained at 10°C or lower, 2.3 parts by mass of distilled water and 5.7 parts by mass of a 0.1 M hydrochloric acid were added to the TMOS methanol solution, and hydrolysis and condensation reaction were performed at 10°C for 60 minutes under stirring to yield a solution (19-2).

Successively, the solution (19-2) was diluted with 214.7 parts by mass of methanol and 436.1 parts by mass of distilled water, and then to the diluted solution, 235.9 parts by mass of the aqueous solution of the partially neutralized product of PAA was added under stirring to yield a solution (19-3).

Successively, while the solution (19-3) was being stirred, 36.2 parts by mass of the APTMOS methanol solution (19-1) was added to the solution (19-3) and stirred for further 30 minutes to yield a solution (19-4).

A gas barrier laminate was obtained in the same manner as in Example 4 except that the solution (19-4) prepared by the above-described method was used as the coating liquid for forming the gas barrier layer (II).

Example 35

Nylon 6 resin and one of the master chips were mixed so as for the content of magnesium oxide to be 50% by mass. The resulting mixture was placed in an extruder A and melt-extruded at 260°C. On the other hand, nylon 6 resin was placed in an extruder B and melt-extruded at 260°C.

The two resins respectively melted in the extruder A and the extruder B were superposed on each other in a die, and a two layer structured sheet having a structure of metal-containing layer (M)/resin layer (R) was extruded from a T-die and brought into close contact with a cooling roll with a surface temperature set at 20°C to yield a 150-$\mu$m-thick unstretched multilayer film having a thickness ratio of (M)/(R) = 5 $\mu$m/145 $\mu$m. The obtained unstretched multilayer film was transferred to a warm water tank set at 50°C and subjected to a water immersion treatment for 2 minutes.

Next, a coating liquid prepared in the same manner as in Example 1 was applied to the surface of the metal-containing layer (M) of the unstretched multilayer film, and then dried.

Simultaneous biaxial stretching and heat treatment performed in the same manner as in Example 1 yielded a gas barrier laminate in which a 15-$\mu$m-thick plastic substrate (I) was composed of a 0.5-$\mu$m-thick metal-containing layer (M) and a 14.5-$\mu$m-thick resin layer (R), and on the metal-containing layer (M) of the plastic substrate (I), a 0.3-$\mu$m-thick gas barrier layer (II) was laminated.

Examples 36 to 40 and 42 to 48 and Comparative Examples 5 and 6

In each of Examples 36 to 40 and 42 to 48 and Comparative Examples 5 and 6, an unstretched multilayer film was obtained in the same manner as in Example 35 except that nylon 6 resin and one of the master chips were mixed so as to obtain the composition described in Table 3, and the extrusion amounts of the extruders A and B were altered so as for the thickness after stretching to be the thickness described in Table 3; the obtained unstretched multilayer film was subjected to water immersion treatment in the same manner as in Example 35.

Next, in each of Examples 36 to 40 and 42 to 48 and Comparative Examples 5 and 6, a coating liquid for forming the gas barrier layer (II) was prepared in the same manner as in Example 1 except that the other resin such as PVA and polycarboxylic acid were allowed to have the mass ratio (solid content) described in Table 3.

In each of Examples 36 to 40 and 42 to 48 and Comparative Examples 5 and 6, a gas barrier laminate was obtained by applying the obtained coating liquid to the unstretched film followed by drying, and then biaxially stretching the dried film in the same manner as in Example 1 except that the obtained coating liquid was used and the thickness after stretching was allowed to be the thickness described in Table 3.

In Example 48, polyethylene terephthalate resin (PET) was used as the thermoplastic resin, and accordingly the conditions were further altered as follows. Specifically, an unstretched film was prepared by setting the cylinder temperature at 280°C, and the obtained unstretched film was not subjected to the water immersion treatment. The temperature in the simultaneous biaxial stretching was set at 90°C, and the heat treatment temperature was set at 230°C.

Example 41

In the same manner as in Example 40 except that the coating liquid for forming the gas barrier layer (II) was applied to the surface of the resin layer (R) of the unstretched multilayer film, there was obtained a gas barrier laminate in which a 15-$\mu$m-thick plastic substrate (I) was composed of a 3-$\mu$m-thick metal-containing layer (M) and a 12-$\mu$m-thick resin layer (R), and on the resin layer (R) of the plastic substrate (I), a 0.3-$\mu$m-thick gas barrier layer (II) was laminated.

Tables 1 to 3 show the constitution and the measurement results of the oxygen permeability of the gas barrier laminates obtained in Examples and Comparative Examples.

[Table 1]

| | | Structure of laminate | | | | Plastic substrate (I) | | | | Gas barrier layer (II) | | | | | | | Oxygen permeability | Haze |
|---|---|---|---|---|---|---|---|---|---|---|---|---|---|---|---|---|---|---|
| | | Layer structure | Thickness (μm) | | | Resin layer (R) | Metal-containing layer (M) | | | Composition | | | | | | | ml/(m2·day·MPa) | (%) |
| | | | R | M | II | Resin | Metal compound | Content (% by mass) | Resin | Other resin | Polycarboxylic acid | Mass ratio | Base | Degree of neutralization (mol%) | Cross-linking agent | | | |
| Examples | 1 | M/II | - | 15 | 0.3 | - | MgO | 0.1 | PA6 | PVA | EMA | 5/5 | NaOH | 10 | - | 125 | 1.4 |
| | 2 | M/II | - | 15 | 0.3 | - | MgO | 0.2 | PA6 | PVA | EMA | 5/5 | NaOH | 10 | - | 21 | 1.9 |
| | 3 | M/II | - | 15 | 0.3 | - | MgO | 0.5 | PA6 | PVA | EMA | 5/5 | NaOH | 10 | - | 8 | 3.1 |
| | 4 | M/II | - | 15 | 0.3 | - | MgO | 1 | PA6 | PVA | EMA | 5/5 | NaOH | 10 | - | 7 | 4.6 |
| | 5 | M/II | - | 15 | 0.3 | - | MgO | 5 | PA6 | PVA | EMA | 5/5 | NaOH | 10 | - | 6 | 18.2 |
| | 6 | M/II | - | 15 | 0.3 | - | MgO | 15 | PA6 | PVA | EMA | 5/5 | NaOH | 10 | - | 6 | 47.3 |
| | 7 | M/II | - | 15 | 0.3 | - | MgO | 0.5 | PA6 | PVA | EMA | 3/7 | NaOH | 10 | - | 11 | 2.9 |
| | 8 | M/II | - | 15 | 0.3 | - | MgO | 1 | PA6 | PVA | EMA | 3/7 | NaOH | 10 | - | 1 | 5.1 |
| | 9 | M/II | - | 15 | 0.3 | - | MgO | 15 | PA6 | PVA | EMA | 3/7 | NaOH | 10 | - | 0.2 | 48.5 |
| | 10 | M/II | - | 15 | 0.3 | - | $MgCO_3$ | 4 | PA6 | PVA | EMA | 3/7 | NaOH | 10 | - | 52 | 13.2 |
| | R11 | M/II | - | 15 | 0.3 | - | CaCOs | 2 | PA6 | PVA | EMA | 3/7 | NaOH | 10 | - | 15 | 60.4 |
| | R12 | M/II | - | 15 | 0.3 | - | ZnO | 4 | PA6 | PVA | EMA | 3/7 | NaOH | 10 | - | 41 | 65.5 |
| | 13 | M/II | - | 15 | 0.3 | - | MgO | 1 | PA6 | EVOH | EMA | 3/7 | NaOH | 10 | - | 5 | - |
| | 14 | M/II | - | 15 | 0.3 | - | MgO | 1 | PA6 | Starch | EMA | 3/7 | NaOH | 10 | - | 12 | - |
| | 15 | M/II | - | 15 | 0.3 | - | MgO | 1 | PA6 | PVA | PAA | 3/7 | NaOH | 10 | - | 5 | - |
| | 16 | M/II | - | 15 | 0.3 | - | MgO | 1 | PA6 | PVA | P(AA-MA) | 3/7 | NaOH | 10 | - | 7 | - |
| | 17 | M/II | - | 15 | 0.3 | - | MgO | 1 | PA6 | PVA | PAA | 3/97 | $NH_3$ | 1.5 | Alkoxysilane | 1 | - |
| | 18 | M/II | - | 15 | 0.3 | - | MgO | 1 | PA6 | PAM | PAA | 3/7 | NaOH | 10 | - | 15 | - |
| | 19 | M/II | - | 15 | 0.3 | - | MgO | 1 | PA6 | - | PAA | - | $NH_3$ | 1 | Alkoxysilane | 1 | - |

EP 2 896 501 B1

(continued)

| | | Structure of laminate | | | | Plastic substrate (I) | | | | Gas barrier layer (II) | | | | | | | Oxygen permeability | Haze |
|---|---|---|---|---|---|---|---|---|---|---|---|---|---|---|---|---|---|---|
| | | Layer structure | Thickness (μm) | | | Resin layer (R) | Metal-containing layer (M) | | | Composition | | | | | | | ml/(m2·day· MPa) | (%) |
| | | | R | M | II | Resin | Metal compound | Content (% by mass) | Resin | Other resin | Polycarboxylic acid | Mass ratio | Base | Degree of neutralization (mol%) | Cross-linking agent | | | |
| Comparative Examples | 1 | M/II | - | 15 | 0.3 | - | MgO | 0.05 | PA6 | PVA | EMA | 5/5 | NaOH | 10 | - | | 406 | - |
| | 2 | M/II | - | 15 | 0.3 | - | MgO | 90 | PA6 | PVA | EMA | 5/5 | NaOH | 10 | - | | Unstretchable | - |
| Examples R11 and R12 are Reference Examples not covered by the claimed invention | | | | | | | | | | | | | | | | | | |

[Table 2]

| | | Structure of laminate | | | | Plastic substrate (I) | | | | Gas barrier layer (II) | | | | | | Oxygen permeability | Haze |
|---|---|---|---|---|---|---|---|---|---|---|---|---|---|---|---|---|---|
| | | Layer structure | Thickness (μm) | | | Resin layer (R) | Metal-containing layer (M) | | | Composition | | | | | | ml/(m²·day·MPa) | (%) |
| | | | R | M | II | Resin | Metal compound | Content (% by mass) | Resin | Other resin | Polycarboxylic acid | Mass ratio | Base | Degree of neutralization (mol%) | Cross-linking agent | | |
| Examples | 20 | M/II | - | 15 | 0.5 | - | MgO | 1 | PA6 | PVA | EMA | 3/7 | NaOH | 10 | - | 1 | - |
| | 21 | M/II | - | 15 | 0.5 | - | MgO | 5 | PA6 | PVA | EMA | 3/7 | NaOH | 10 | - | 1 | 14.7 |
| | 22 | M/II | - | 15 | 0.5 | - | MgO-2 | 5 | PA6 | PVA | EMA | 3/7 | NaOH | 10 | - | 5 | 46.4 |
| | 23 | M/II | - | 15 | 0.5 | - | MgO | 15 | PA6 | PVA | EMA | 3/7 | NaOH | 10 | - | 0.2 | - |
| | 24 | M/II | - | 15 | 0.5 | - | MgO | 30 | PA6 | PVA | EMA | 3/7 | NaOH | 10 | - | 0.1 | - |
| | 25 | M/II | - | 30 | 0.5 | - | MgO | 5 | PA6 | PVA | EMA | 3/7 | NaOH | 10 | - | 0.9 | - |
| | 26 | M/II | - | 15 | 2 | - | MgO | 5 | PA6 | PVA | EMA | 3/7 | NaOH | 10 | - | 0.8 | - |
| | 27 | M/II | - | 15 | 0.5 | - | MgO | 5 | PET | PVA | EMA | 3/7 | NaOH | 10 | - | 3 | - |
| | 28 | M/II | - | 15 | 0.5 | - | MgO | 5 | PA6 | PVA | EMA | 5/5 | NaOH | 10 | - | 3 | - |
| | 29 | M/II | - | 15 | 0.5 | - | MgO | 5 | PA6 | PVA | EMA | 7/3 | NaOH | 10 | - | 70 | - |
| | 30 | M/II | - | 15 | 0.5 | - | MgO | 1 | PA6 | EVOH | EMA | 3/7 | NaOH | 10 | - | 5 | - |
| | 31 | M/II | - | 15 | 0.5 | - | MgO | 1 | PA6 | PVA | PAA | 3/7 | NaOH | 10 | - | 5 | - |
| | 32 | M/II | - | 15 | 0.2 | - | MgO | 1 | PA6 | PVA | EMA | 3/7 | NaOH | 10 | - | 5* | - |
| | 33 | M/II | - | 15 | 0.2 | - | MgO | 1 | PA6 | PVA | EMA | 3/7 | NaOH | 10 | - | 69* | - |
| | 34 | M/II | - | 150 | 0.2 | - | MgO | 1 | PA6 | PVA | EMA | 3/7 | NaOH | 10 | - | 23* | - |
| Comparative Examples | 3 | M | - | 150 | - | - | MgO | 1 | PA6 | - | - | - | - | - | - | 42* | - |
| | 4 | M/II | - | 15 | 0.5 | - | MgO | 5 | PA6 | PVA | - | 1/0 | - | - | - | 650 | - |

* Gas barrier laminate treated at 40°C and 90% RH for 3 days was measured.

EP 2 896 501 B1

18

[Table 3]

| | | Structure of laminate | | | | Plastic substrate (I) | | | | Gas barrier layer (II) | | | | | | | Oxygen permeability | Haze |
|---|---|---|---|---|---|---|---|---|---|---|---|---|---|---|---|---|---|---|
| | | Layer structure | Thickness (μm) | | | Resin layer (R) | Metal-containing layer (M) | | | Composition | | | | | | | ml/(m2·day·MPa) | (%) |
| | | | R | M | II | Resin | Metal compound | Content (% by mass) | Resin | Other resin | Polycarboxylic acid | Mass ratio | Base | Degree of neutralization (mol%) | Cross-linking agent | | | |
| Examples | 35 | R/M/II | 14.5 | 0.5 | 0.3 | PA6 | MgO | 50 | PA6 | PVA | EMA | 5/5 | NaOH | 10 | - | 0.2 | - |
| | 36 | R/M/II | 14.5 | 0.5 | 0.3 | PA6 | MgO | 0.5 | PA6 | PVA | EMA | 5/5 | NaOH | 10 | - | 201 | 0.5 |
| | 37 | R/M/II | 14 | 1 | 0.3 | PA6 | MgO | 0.5 | PA6 | PVA | EMA | 5/5 | NaOH | 10 | - | 78 | 1.4 |
| | 38 | R/M/II | 13 | 2 | 0.3 | PA6 | MgO | 0.5 | PA6 | PVA | EMA | 5/5 | NaOH | 10 | - | 16 | 1.1 |
| | 39 | R/M/II | 12 | 3 | 0.3 | PA6 | MgO | 15 | PA6 | PVA | EMA | 5/5 | NaOH | 10 | - | 0.3 | 27.3 |
| | 40 | R/M/II | 12 | 3 | 0.3 | PA6 | MgO | 15 | PA6 | PVA | EMA | 3/7 | NaOH | 10 | - | 0.3 | 25.4 |
| | 41 | M/R/II | 12 | 3 | 0.3 | PA6 | MgO | 15 | PA6 | PVA | EMA | 3/7 | NaOH | 10 | - | 47 | 24.1 |
| | 42 | R/M/II | 10 | 5 | 0.5 | PA6 | MgO | 0.3 | PA6 | PVA | EMA | 3/7 | NaOH | 10 | - | 32 | - |
| | 43 | R/M/II | 10 | 5 | 0.5 | PA6 | MgO | 9 | PA6 | PVA | EMA | 3/7 | NaOH | 10 | - | 5 | - |
| | 44 | R/M/II | 10 | 5 | 0.5 | PA6 | MgO | 30 | PA6 | PVA | EMA | 3/7 | NaOH | 10 | - | 0.1 | - |
| | 45 | R/M/II | 10 | 5 | 0.5 | PA6 | MgO | 45 | PA6 | PVA | EMA | 3/7 | NaOH | 10 | - | 0.04 | - |
| | 46 | R/M/II | 13 | 2 | 0.5 | PA6 | MgO | 15 | PA6 | PVA | EMA | 3/7 | NaOH | 10 | - | 0.8 | - |
| | 47 | R/M/II | 5 | 10 | 0.5 | PA6 | MgO | 15 | PA6 | PVA | EMA | 7/3 | NaOH | 10 | - | 0.3 | - |
| | 48 | R/M/II | 10 | 5 | 0.5 | PET | MgO | 15 | PET | PVA | EMA | 3/7 | NaOH | 10 | - | 0.9 | - |
| Comparative Examples | 5 | R/M/II | 10 | 5 | 0.5 | PA6 | MgO | 75 | PA6 | PVA | EMA | 3/7 | NaOH | 10 | - | Unstretchable | - |
| | 6 | R/M/II | 10 | 5 | 0.5 | PA6 | MgO | 15 | PA6 | PVA | - | 1/0 | - | - | - | - | 650 | - |

In any of Examples 1 to 10, R11, R12 and 13 to 48, a gas barrier laminate excellent in gas barrier property was obtained. As compared to the gas barrier laminate of Example 33 in which an unstretched film was simultaneously biaxially stretched, and then a coating liquid for forming the gas barrier layer (II) was applied to form a gas barrier layer, the gas barrier laminate of Example 32 in which a coating liquid for forming the gas barrier layer (II) was applied to an unstretched film, and then the unstretched film was simultaneously biaxially stretched was further excellent in gas barrier property.

In Comparative Example 1, the content of the metal compound included in the plastic substrate (I) was less than 0.1% by mass, and hence a gas barrier laminate having sufficient gas barrier property was not obtained.

In each of Comparative Examples 2 and 5, the content of the metal compound included in the plastic substrate (I) exceeded 70% by mass, and hence the film was broken in the stretching at the time of film formation and no gas barrier laminate was obtained.

In each of Comparative Examples 4 and 6, the gas barrier layer (II) did not include polycarboxylic acid, and hence a gas barrier laminate having sufficient gas barrier property was not obtained.

## Claims

1. A gas barrier laminate comprising a gas barrier layer (II) laminated on a plastic substrate (I), wherein

   a thermoplastic resin constituting the plastic substrate (I) is a polyamide resin or a polyester resin,
   the plastic substrate (I) includes a metal compound in a content of 0.1 to 70% by mass, the metal compound being selected from magnesium oxide and magnesium carbonate, and
   the gas barrier layer (II) includes a polycarboxylic acid.

2. The gas barrier laminate according to claim 1, wherein the plastic substrate (I) is a multilayer film, and at least one layer of the multilayer film includes the metal compound in a content of 0.1 to 70% by mass.

3. The gas barrier laminate according to claim 1 or 2, wherein the polycarboxylic acid is ethylene-maleic acid copolymer (EMA).

4. The gas barrier laminate according to any one of claims 1 to 3, wherein the gas barrier layer (II) includes a polyalcohol.

5. The gas barrier laminate according to any one of claims 1 to 4, wherein the metal compound is magnesium oxide.

6. The gas barrier laminate according to any one of claims 1 to 5, wherein after a hydrothermal treatment at 95°C for 30 minutes, an oxygen permeability in an atmosphere of 20°C and a relative humidity of 65% is 300 ml/(m$^2$·day·MPa) or less.

7. The gas barrier laminate according to any one of claims 1 to 6, wherein the gas barrier laminate is simultaneously or successively biaxially stretched.

8. A packaging bag comprising the gas barrier laminate according to any one of claims 1 to 7.

9. A method for producing the gas barrier laminate according to claim 1, the method comprising :

   melting a thermoplastic resin including a metal compound as mixed therein by heat and extruding the heat melted thermoplastic resin into a film shape, with an extruder;
   solidifying the extruded, heat melted thermoplastic resin by cooling so as to obtain an unstretched film as a plastic substrate (I);
   applying a coating liquid for forming a gas barrier layer (II) to the unstretched film so as to form a gas barrier layer (II) thereon to obtain a laminate; and
   simultaneously biaxially stretching the obtained laminate in the longitudinal direction (MD) and the transverse direction (TD) with a tenter-type biaxial stretching machine.

10. A method for producing the gas barrier laminate according to claim 1, the method comprising :

   melting a thermoplastic resin including a metal compound as mixed therein by heat and extruding the heat melted thermoplastic resin into a film shape, with an extruder;

solidifying the extruded, heat melted thermoplastic resin by cooling so as to obtain an unstretched film as a plastic substrate (I);
stretching the obtained unstretched film in the longitudinal direction (MD) to obtain a longitudinally stretched film:

applying a coating liquid for forming a gas barrier layer to the longitudinally stretched film so as to form the gas barrier layer (II) thereon; and then
stretching the resulting film having the gas barrier layer (II) in the transverse direction (TD).

**Patentansprüche**

1. Laminat, das eine Gasbarriere bildet, umfassend eine auf ein Kunststoffsubstrat (I) laminierte Gasbarriereschicht (II), wobei

    ein thermoplastisches Harz, welches das Kunststoffsubstrat (I) bildet, ein Polyamidharz oder ein Polyesterharz ist,
    das Kunststoffsubstrat (I) eine Metallverbindung in einem Gehalt von 0,1 bis 70 Ma% umfasst, wobei die Metallverbindung aus Magnesiumoxid und Magnesiumcarbonat ausgewählt ist, und
    die Gasbarriereschicht (II) eine Polycarbonsäure umfasst.

2. Laminat, das eine Gasbarriere bildet, nach Anspruch 1, wobei das Kunststoffsubstrat (I) eine Mehrschichtfolie ist, und mindestens eine Schicht der Mehrschichtfolie die Metallverbindung in einem Gehalt von 0,1 bis 70 Ma% umfasst.

3. Laminat, das eine Gasbarriere bildet, nach Anspruch 1 oder 2, wobei die Polycarbonsäure ein Ethylen-Maleinsäure-Copolymer (EMA) ist.

4. Laminat, das eine Gasbarriere bildet, nach einem der Ansprüche 1 bis 3, wobei die Gasbarriereschicht (II) ein Polyol umfasst.

5. Laminat, das eine Gasbarriere bildet, nach einem der Ansprüche 1 bis 4, wobei die Metallverbindung Magnesiumoxid ist.

6. Laminat, das eine Gasbarriere bildet, nach einem der Ansprüche 1 bis 5, wobei nach einer hydrothermalen Verarbeitung bei 95 °C während 30 Minuten die Durchlässigkeit für Sauerstoff in einer Atmosphäre bei 20 °C und einer relativen Feuchtigkeit von 65 % 300 ml/(m$^2$•Tag•MPa) oder weniger beträgt.

7. Laminat, das eine Gasbarriere bildet, nach einem der Ansprüche 1 bis 6, wobei das Laminat, das eine Gasbarriere bildet, gleichzeitig oder aufeinanderfolgend biaxial gestreckt wird.

8. Verpackungsbeutel, der das Laminat, das eine Gasbarriere bildet, von einem der Ansprüche 1 bis 7 umfasst.

9. Verfahren zur Herstellung des Laminats, das eine Gasbarriere bildet, von Anspruch 1, wobei das Verfahren umfasst:

    das Schmelzen eines thermoplastischen Harzes, das eine in dieses gemischte Metallverbindung umfasst, mittels Wärme und das Extrudieren des wärmegeschmolzenen thermoplastischen Harzes in Form einer Folie mit Hilfe eines Extruders;
    das Verfestigen des extrudierten wärmegeschmolzenen thermoplastischen Harzes durch Abkühlen derart, dass eine nicht gestreckte Folie erhalten wird, die als Kunststoffsubstrat (I) dient;
    das Auftragen einer Beschichtungsflüssigkeit, um eine Gasbarriereschicht (II) auf der nicht gestreckten Folie derart zu bilden, dass eine Gasbarriereschicht (II) auf ihr gebildet wird, damit ein Laminat erhalten wird; und
    das gleichzeitige biaxiale Strecken des erhaltenen Laminats in der Längsrichtung (MD) und in der Querrichtung (TD) mit einer biaxialen Streckmaschine des Typs mit Stange.

10. Verfahren zur Herstellung des Laminats, das eine Gasbarriere bildet, von Anspruch 1, wobei das Verfahren umfasst:

    das Schmelzen eines thermoplastischen Harzes, das eine in dieses gemischte Metallverbindung umfasst, mittels Wärme und das Extrudieren des wärmegeschmolzenen thermoplastischen Harzes in Form einer Folie mit Hilfe eines Extruders;

das Verfestigen des extrudierten wärmegeschmolzenen thermoplastischen Harzes durch Abkühlen derart, dass eine nicht gestreckte Folie erhalten wird, die als Kunststoffsubstrat (I) dient;

das Strecken der erhaltenen nicht gestreckten Folie in der Längsrichtung (MD), um eine längsgestreckte Folie zu erhalten,

das Auftragen einer Beschichtungsflüssigkeit, um eine Gasbarriereschicht auf der längsgestreckten Folie derart zu bilden, dass eine Gasbarriereschicht (II) auf ihr gebildet wird; und

das Strecken der resultierenden Folie mit der Gasbarriereschicht (II) in der Querrichtung (TD).

## Revendications

1. Stratifié formant barrière aux gaz comprenant une couche de barrière aux gaz (II) stratifiée sur un substrat plastique (I), dans lequel

   une résine thermoplastique constituant le substrat plastique (I) est une résine de polyamide ou une résine de polyester,
   le substrat plastique (I) comprend un composé métallique en une teneur de 0,1 à 70 % en masse, le composé métallique étant choisi parmi l'oxyde de magnésium et le carbonate de magnésium, et
   la couche de barrière aux gaz (II) comprend un poly(acide carboxylique).

2. Stratifié formant barrière aux gaz selon la revendication 1, dans lequel le substrat plastique (I) est un film multicouche, et au moins une couche du film multicouche comprend le composé métallique en une teneur de 0,1 à 70 % en masse.

3. Stratifié formant barrière aux gaz selon la revendication 1 ou 2, dans lequel le poly(acide carboxylique) est un copolymère d'éthylène-acide maléique (EMA).

4. Stratifié formant barrière aux gaz selon l'une quelconque des revendications 1 à 3, dans lequel la couche de barrière aux gaz (II) comprend un polyol.

5. Stratifié formant barrière aux gaz selon l'une quelconque des revendications 1 à 4, dans lequel le composé métallique est l'oxyde de magnésium.

6. Stratifié formant barrière aux gaz selon l'une quelconque des revendications 1 à 5, dans lequel, après un traitement hydrothermal à 95°C pendant 30 minutes, la perméabilité à l'oxygène dans une atmosphère à 20°C et sous une humidité relative de 65 % est de 300 ml/(m$^2$•jour•MPa) ou moins.

7. Stratifié formant barrière aux gaz selon l'une quelconque des revendications 1 à 6, lequel stratifié formant barrière aux gaz est étiré biaxialement simultanément ou successivement.

8. Sac d'emballage comprenant le stratifié formant barrière aux gaz de l'une quelconque des revendications 1 à 7.

9. Procédé pour produire le stratifié formant barrière aux gaz de la revendication 1, le procédé comprenant :

   la fusion d'une résine thermoplastique comprenant un composé métallique mélangé dans celle-ci au moyen de chaleur et l'extrusion de la résine thermoplastique fondue à la chaleur sous la forme d'un film, au moyen d'une extrudeuse ;
   la solidification de la résine thermoplastique fondue à la chaleur extrudée par refroidissement de façon que soit obtenu un film non étiré servant de substrat plastique (I) ;
   l'application d'un liquide de revêtement pour former une couche de barrière aux gaz (II) sur le film non étiré de façon à former une couche de barrière aux gaz (II) sur celui-ci afin que soit obtenu un stratifié ; et
   l'étirement biaxial simultané du stratifié obtenu dans la direction longitudinale (MD) et dans la direction transversale (TD) avec une machine d'étirement biaxial du type à rame.

10. Procédé pour produire le stratifié formant barrière aux gaz de la revendication 1, le procédé comprenant :

    la fusion d'une résine thermoplastique comprenant un composé métallique mélangé dans celle-ci au moyen de chaleur et l'extrusion de la résine thermoplastique fondue à la chaleur sous la forme d'un film, au moyen d'une extrudeuse ;

la solidification de la résine thermoplastique fondue à la chaleur extrudée par refroidissement de façon que soit obtenu un film non étiré servant de substrat plastique (I) ;

l'étirement du film non étiré obtenu dans la direction longitudinale (MD) pour que soit obtenu un film étiré longitudinalement ;

l'application d'un liquide de revêtement pour former une couche de barrière aux gaz sur le film étiré longitudinalement de façon à former une couche de barrière aux gaz (II) sur celui-ci ; et

l'étirement du film résultant ayant la couche de barrière aux gaz (II) dans la direction transversale (TD).

**EP 2 896 501 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004322626 A
- EP 1614532 A1